# EUROPEAN PATENT SPECIFICATION

(11) **EP 4 129 820 B1**
(45) Date of publication and mention of the grant of the patent: **25.12.2024**
(21) Application number: 20926430.8
(22) Date of filing: 26.03.2020
(51) Int. Cl.: G01W 1/10, G01C 21/20, G05D 1/00

(54) **UNMANNED FLYING OBJECT CONTROL ASSISTANCE SYSTEM AND UNMANNED FLYING OBJECT CONTROL ASSISTANCE METHOD**
STEUERUNGSASSISTENZSYSTEM FÜR UNBEMANNTEN FLUGOBJEKT UND STEUERUNGSASSISTENZVERFAHREN FÜR UNBEMANNTEN FLUGOBJEKT
SYSTÈME D'ASSISTANCE DE COMMANDE D'OBJET VOLANT SANS PILOTE ET PROCÉDÉ D'ASSISTANCE DE COMMANDE D'OBJET VOLANT SANS PILOTE

(43) Date of publication of application: 08.02.2023
(73) Proprietor: Hitachi, Ltd., Tokyo 100-8280 (JP)
(72) Inventor: NAKAMURA Masamichi, Tokyo 100-8280 (JP)
(74) Representative: MERH-IP Matias Erny Reichl Hoffmann Patentanwälte PartG mbB
(86) International application number: PCT/JP2020/013815
(87) International publication number: WO 2021/192185

(56) References cited:
- WO-A1-2017/098571
- WO-A1-2018/169652
- WO-A1-2020/013153
- JP-A- 2011 246 105
- JP-A- 2019 082 435
- US-A1- 2019 101 934
- US-A1- 2019 147 753
- US-A1- 2019 271 563

## Description

### Technical Field

The present invention relates to the technology of unmanned flying object control assistance systems, and unmanned flying object control assistance methods.

### Background Art

Drones (unmanned flying objects) have been used increasingly for inspecting windmills used for wind power generation, and the like. In such a case, a drone captures images of a windmill, and, on the basis of the images, an inspector makes an assessment as to whether or not maintenance is necessary or the like. When a drone is used for such uses, it is necessary to capture high-resolution images, and so it is necessary for the drone to fly and stay in the air stably. However, because drones are small-sized and lightweight, there are problems that they are easily influenced by the wind, and particularly are easily influenced by wind condition changes such as gusts.

To cope with such problems, Patent Literature 1 is disclosed. Patent Literature 1 discloses a flight route calculation system, a flight route calculation program, and an unmanned aerial vehicle route control method that are aimed to "make it possible for a drone to fly without requiring manual maneuvering, and taking influences of the wind into consideration. An unmanned aerial vehicle flight management system 1 includes: a three-dimensional map data storage section 172 that stores three-dimensional map data in the horizontal direction, and height direction of a space where there are no ground objects, and an unmanned aerial vehicle 6 can fly; a current position acquiring section 175 that acquires a current position; a transport instruction acquiring section 166 that acquires a destination; a route calculating section 167 that calculates a flyable route in the map data from the current position to the destination; a lidar data acquiring section 121 that acquires wind condition data; a dangerous wind condition area assessing section 123 that calculates, from the wind condition data, an alert area where flights had better be avoided; and a route recalculating section 164 that recalculates a route that avoids the alert area in a case that the route calculated by the route calculating section 167 is a route that passes through the alert area calculated by the dangerous wind condition area assessing section 123."

Patent Literature 2 discloses a wind forecasting system configured to generate forecasted wind conditions for a time interval based on wind data derived from flight log data collected from a plurality of aerial vehicles operating in a first area. The forecasted wind conditions can be used by an aerial route management system to generate a flight plan for an aerial vehicle from a start location to an end location in the first area during the time interval.

Patent Literature 3 discloses an apparatus and method for determining link level wind factors and providing routes for drones based on the wind factors. Wind factor values are assigned to a range of altitudes of drone air space above a road link of the road network based on a wind model and stored in a database. The wind model is applied to a location based on wind condition data and three-dimensional (3D) features from 3D map data associated with the location. The route is optimized based on the determined wind factors.

Patent Literature 4 discloses a system for taking into account micro wind conditions in a region. The system comprises a plurality of aerial vehicles within the region and a wind speed calculator. Each of the plurality of aerial vehicles has an altitude sensor and a GPS receiver. The wind speed calculator is configured to determine wind vectors within the region using measurements from the plurality of aerial vehicles.

Patent Literature 5 relates to the inspection of assets, such as assets having parts that move during operation. Operational data for the asset may be incorporated into planning or adapting the flight plan and/or operational commands may be issued to asset in accordance with the flight plan to facilitate acquisition of the inspection data.

### Citation List

### Patent Literature

Patent Literature 1: WO 2020/013153
Patent Literature 2: US 2019/271563 A1
Patent Literature 3: US 201 9/1 01 934 A1
Patent Literature 4: US 2019/147753 A1
Patent Literature 5: WO 2018/169652 A1

### Summary of Invention

### Technical Problem

However, whereas Patent Literature 1 describes predictions of wind conditions in the near future from measured wind condition data, specific techniques of the predictions are not described.

The present invention has been made in view of such a background, and an object of the present invention is to enable stable flights of an unmanned flying object.

### Solution to Problem

The invention is set out in the appended set of claims.

### Advantageous Effects of Invention

According to the present invention, it is possible to cause an unmanned flying object to fly stably.

### Brief Description of Drawings

Fig. 1 is a figure depicting a configuration example of a drone control assistance system.
Fig. 2 is a functional block diagram of a simulation apparatus in the present embodiment.
Fig. 3 is a functional block diagram of a wind condition estimating apparatus in the present embodiment.
Fig. 4 is a flowchart depicting the procedure of processes performed by the simulation apparatus in the present embodiment.
Fig. 5 is a flowchart depicting the procedure of processes performed by the wind condition estimating apparatus in the present embodiment.
Fig. 6 is a figure (No. 1) depicting an example of past weather data.
Fig. 7 is a figure (No. 2) depicting an example of the past weather data.
Fig. 8 is a figure depicting virtual wind condition data, and results of a wind condition simulation.
Fig. 9 is a figure depicting results of a flow field feature analysis process.
Fig. 10 is a figure (No. 1) depicting an example of execution by the drone control assistance system according to the present embodiment.
Fig. 11 is a figure (No. 2) depicting an example of the execution by the drone control assistance system according to the present embodiment.
Fig. 12 is a figure (No. 3) depicting an example of the execution by the drone control assistance system according to the present embodiment.
Fig. 13 is a figure depicting another application example of the drone control assistance system according to the present embodiment.

### Description of Embodiments

Next, embodiments for carrying out the present invention (referred to as "embodiments") are explained in detail with reference to the figures as appropriate. Note that similar constituent elements in the figures are given identical reference characters, and explanations thereof are omitted.

### <System>

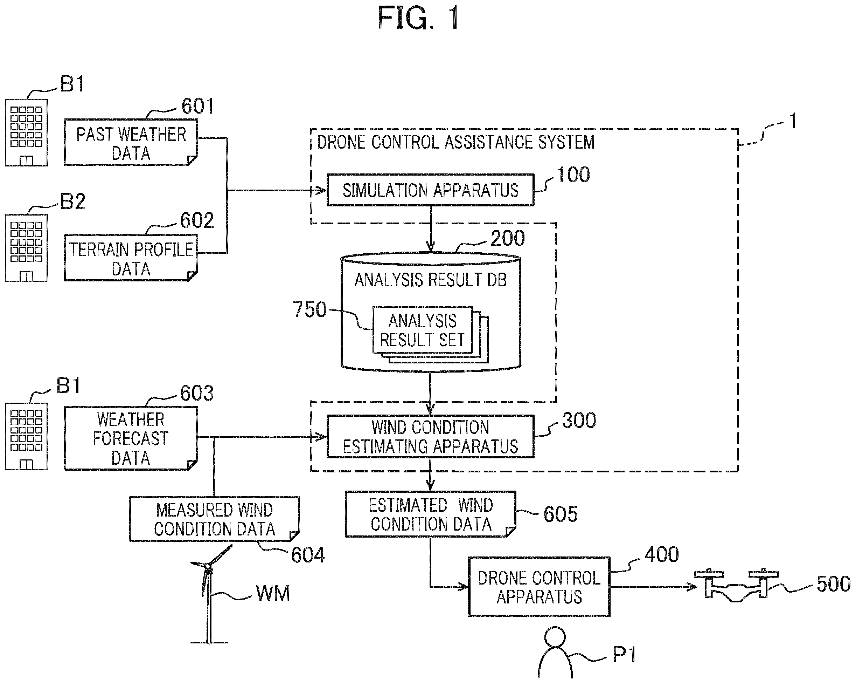

Fig. 1 is a figure depicting a configuration example of a drone control assistance system 1.

The drone control assistance system 1 has a simulation apparatus 100, and a wind condition estimating apparatus 300. Note that the drone control assistance system 1 may include an analysis result DB 200.

The simulation apparatus 100 acquires past weather data 601 from a weather center B1, and acquires terrain profile data 602 from a geographic center B2. Then, the simulation apparatus 100 performs a simulation (wind condition simulation) of wind conditions in a wind-condition estimation area on the basis of the data. Here, wind conditions are wind speeds, and wind directions. In addition, the wind-condition estimation area is an area where wind conditions are estimated for flying a drone 500. In other words, the wind-condition estimation area is an area for flying the drone 500.

Furthermore, the simulation apparatus 100 performs a flow field feature analysis of wind conditions of the wind-condition estimation area obtained as a result of the wind condition simulation. The flow field feature analysis is described later. It is supposed here that, as a result of the flow field feature analysis, analysis result sets 750 are generated. The analysis result sets 750 are described later. Then, the simulation apparatus 100 stores, in the analysis result DB 200, the generated analysis results (here, the analysis result sets 750).

On the basis of weather forecast data 603, and measured wind condition data 604, the wind condition estimating apparatus 300 acquires an analysis result from the analysis result DB 200. Then, on the basis of the acquired analysis result (here, an analysis result set 750), the wind condition estimating apparatus 300 estimates wind conditions of the wind-condition estimation area of a time after the passage of predetermined time from the current time. Note that the weather forecast data 603 is acquired from the weather center B1 or the like. In addition, the measured wind condition data 604 is acquired from a wind speed sensor or the like which is not depicted, but is included in a windmill WM.

Then, the wind condition estimating apparatus 300 outputs, to a drone control apparatus 400, data (estimated wind condition data 605) of the estimated wind conditions.

On the basis of the estimated wind condition data 605 output to the drone control apparatus 400, an operator P1 controls the drone 500 by operating the drone control apparatus 400. For example, the estimated wind condition data 605 output to the drone control apparatus 400 is displayed on a display apparatus which is not depicted, but is included in the drone control apparatus 400. On the basis of the estimated wind conditions displayed on the display apparatus which is not depicted, the operator P1 performs control (maneuvering) of the drone 500.

### (Simulation Apparatus 100)

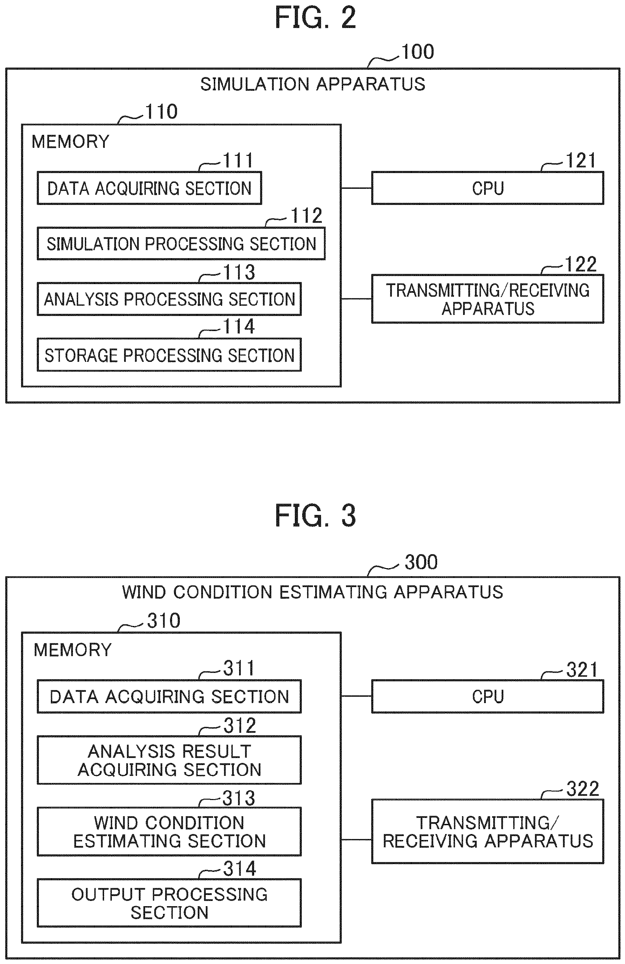

Fig. 2 is a functional block diagram of the simulation apparatus 100 in the present embodiment. Fig. 1 is referred to as appropriate.

The simulation apparatus 100 includes at least a memory 110, a CPU (Central Processing Unit) 121, and a transmitting/receiving apparatus 122.

The transmitting/receiving apparatus 122 receives the past weather data 601 from the weather center B1, receives the terrain profile data 602 from the geographic center B2, and so on. In addition, the transmitting/receiving apparatus 122 transmits an analysis result set 750, and the like to the analysis result DB 200.

In addition, a program stored on a storage apparatus which is not depicted is loaded onto the memory 110, and the loaded program is executed by the CPU 121. Thereby, a data acquiring section 111, a simulation processing section 112, an analysis processing section 113, and a storage processing section 114 are realized.

Via the transmitting/receiving apparatus 122, the data acquiring section 111 acquires the past weather data 601 from the weather center B1, acquires the terrain profile data 602 from the geographic center B2, and so on.

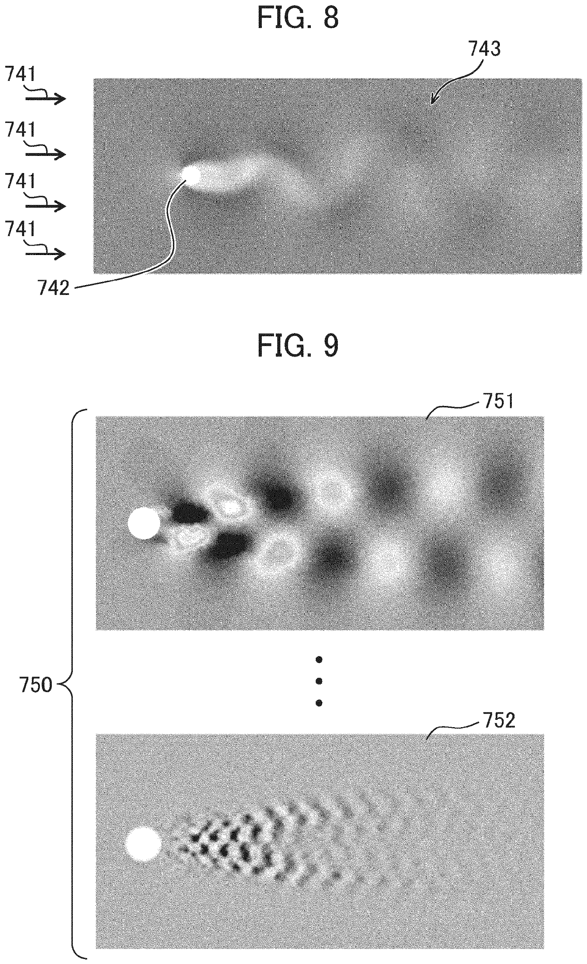

On the basis of the acquired past weather data 601, and terrain profile data 602, the simulation processing section 112 calculates virtual wind condition data 741 (see Fig. 8) of time t. In addition, on the basis of the calculated virtual wind condition data 741, the simulation processing section 112 performs a simulation (wind condition simulation) of wind conditions of the wind-condition estimation area of time t+1. The virtual wind condition data 741 is described later, and is input data in the wind condition simulation. Here, time t+1 means a time which is predetermined time after time t.

The analysis processing section 113 performs a flow field feature analysis process such as principal component analysis (proper orthogonal decomposition) of results of the simulation by the simulation processing section 112.

Via the transmitting/receiving apparatus 122, the storage processing section 114 stores the results obtained by the analysis processing section 113 in the analysis result DB 200 in association with weather conditions, and the like in the virtual wind condition data 741, and the past weather data 601.

### (Wind Condition Estimating Apparatus 300)

Fig. 3 is a functional block diagram of the wind condition estimating apparatus 300 in the present embodiment. Fig. 1 is referred to as appropriate.

The wind condition estimating apparatus 300 includes at least a memory 310, a CPU 321, and a transmitting/receiving apparatus 322.

The transmitting/receiving apparatus 322 receives the weather forecast data 603 from the weather center B1, receives the measured wind condition data 604, which is data of measured wind conditions, and so on. In addition, the transmitting/receiving apparatus 322 acquires an analysis result set 750 from the analysis result DB 200, outputs, to the drone control apparatus 400, the estimated wind condition data (the estimated wind condition data 605) of the wind-condition estimation area, and so on.

Then, a program stored on a storage apparatus which is not depicted is loaded onto the memory 310, and the loaded program is executed by the CPU 321. Thereby, a data acquiring section 311, an analysis result acquiring section 312, a wind condition estimating section 313, and an output processing section 314 are realized.

Via the transmitting/receiving apparatus 322, the data acquiring section 311 acquires the weather forecast data 603 from the weather center B1, acquires the measured wind condition data 604 from the wind speed sensor (not depicted) included in the windmill WM or the like, and so on.

On the basis of the acquired weather forecast data 603, and measured wind condition data 604, the analysis result acquiring section 312 acquires an analysis result set 750 from the analysis result DB 200.

On the basis of the acquired analysis result set 750, the wind condition estimating section 313 estimates wind conditions of the wind-condition estimation area.

The output processing section 314 outputs, to the drone control apparatus 400, data (the estimated wind condition data 605) of the estimated wind conditions.

### <Flowchart>

### (Processes at Simulation Apparatus 100)

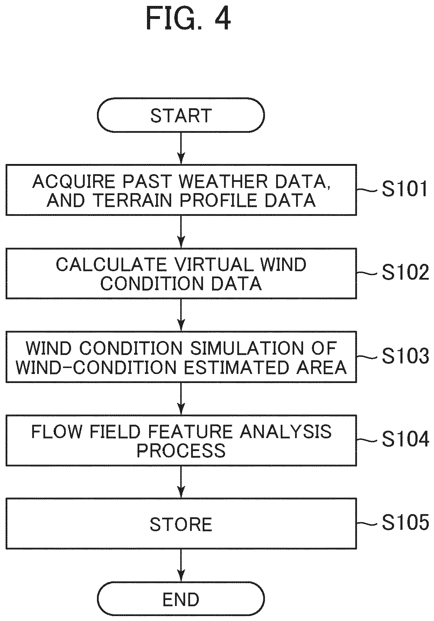

Fig. 4 is a flowchart depicting the procedure of processes performed by the simulation apparatus 100 in the present embodiment. Details of processes at Steps S101 to S105 are described later. In addition, Fig. 1 to Fig. 3 are referred to as appropriate.

First, via the transmitting/receiving apparatus 122, the data acquiring section 111 acquires the past weather data 601 from the weather center B1, and acquires the terrain profile data 602 from the geographic center B2 (S101).

Next, the simulation processing section 112 calculates the virtual wind condition data 741 (see Fig. 8) of a geographical point (S102). The virtual wind condition data 741 is described later.

Then, on the basis of the input virtual wind condition data 741, past weather data 601, and terrain profile data 602, the simulation processing section 112 performs a simulation (wind condition simulation) of wind conditions of the wind-condition estimation area (S103).

Next, the analysis processing section 113 performs a flow field feature analysis process on results of the process at Step S103 (S104). A technique used for the flow field feature analysis process is sy component analysis (proper orthogonal decomposition), Fourier analysis or the like as described before.

Then, the storage processing section 114 stores, in the analysis result DB 200, results (analysis results; the analysis result sets 750 in the present embodiment) of the flow field feature analysis process (S105).

The simulation apparatus 100 performs the processes at Steps S101 to S105 on various pieces of virtual wind condition data 741. Then, the simulation apparatus 100 stores, in the analysis result DB 200, the analysis results (analysis result sets 750) in association with a corresponding piece of the virtual wind condition data 741, and weather conditions used for calculations of the piece of the virtual wind condition data 741.

### (Processes at Wind Condition Estimating Apparatus 300)

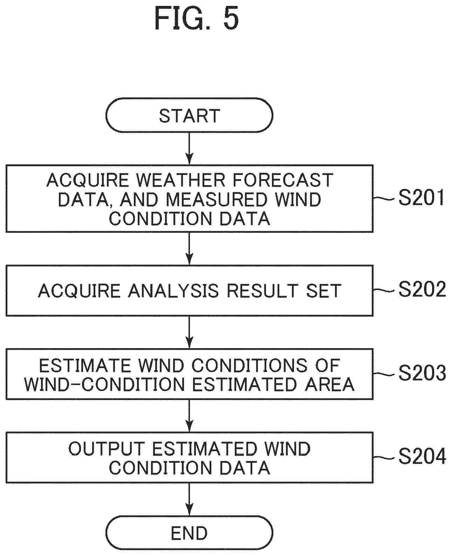

Fig. 5 is a flowchart depicting the procedure of processes performed by the wind condition estimating apparatus 300 in the present embodiment. Details of processes at Steps S201 to S204 are described later. In addition, Fig. 1 to Fig. 3 are referred to as appropriate.

The data acquiring section 311 acquires the weather forecast data 603, and the measured wind condition data 604 via the transmitting/receiving apparatus 322 (S201). As described before, the weather forecast data 603 is acquired from the weather center B1, and the measured wind condition data 604 is acquired from the wind speed sensor (not depicted) included in the windmill WM or the like, for example.

Next, the analysis result acquiring section 312 acquires an analysis result set 750 matching weather conditions of the acquired measured wind condition data 604, and weather forecast data 603 (S202).

Then, on the basis of the acquired analysis result set 750, the wind condition estimating section 313 estimates wind conditions of the wind-condition estimation area of a time after the passage of predetermined time from the current time (S203). If the current time is time t, the time which is the predetermined time after the current time here means a time equivalent to time t+1.

Thereafter, the output processing section 314 outputs the estimated wind condition data (estimated wind condition data 605) of the wind-condition estimation area (S204).

### <Specific Example of Processes>

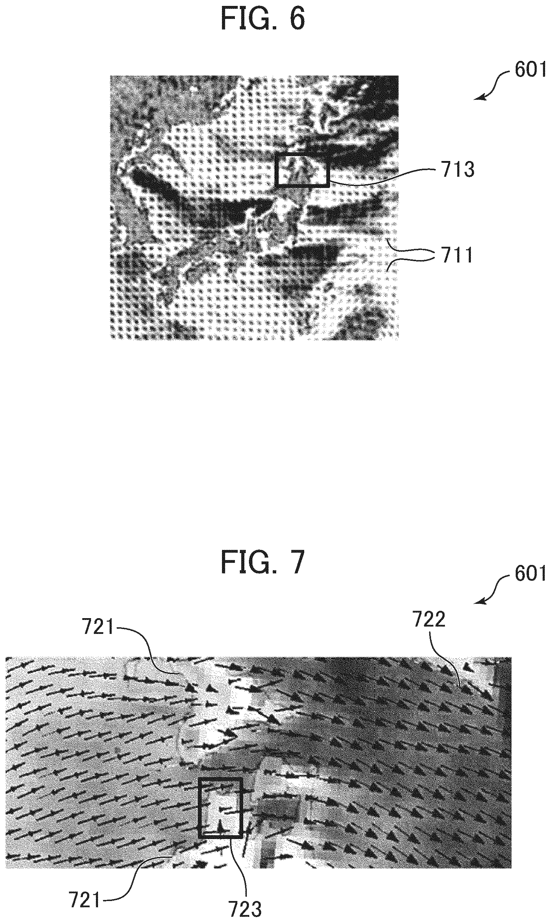

Next, with reference to Fig. 6 to Fig. 9, a specific example of each process in Fig. 4, and Fig. 5 is explained.

First, a specific example of the processes at Steps S101 to S105 in Fig. 4 is explained with reference to Fig. 6, and the like.

### (S101)

Fig. 6 is a figure depicting an example of the past weather data 601 acquired at Step S101 in Fig. 4.

Fig. 6 depicts the past weather data 601 about Japan, and its surrounding areas.

Fig. 6 depicts wind conditions in the past weather data 601. That is, reference character 711 denotes arrows representing wind directions, and shading represents wind speeds. That is, the darker the shading is, the faster the wind speed is, and the brighter the shading is, the slower the wind speed is. Here, the past weather data 601 of an area represented by reference character 713 where the target windmill WM of an estimation of wind conditions is installed is depicted in Fig. 7, which is described later.

Fig. 7 depicts the past weather data 601 of the area represented by reference character 713 in Fig. 6.

In Fig. 7, reference character 721 denotes the contour of the terrain profile, and reference character 722 denotes arrows representing wind directions. In addition, the shading in Fig. 7 represents wind speeds. That is, the darker the shading is, the faster the wind speed is, and the brighter the shading is, the slower the wind speed is.

In addition, reference character 723 denotes the wind-condition estimation area.

### (S102, and S103)

Fig. 8 is a figure depicting the virtual wind condition data 741 calculated at Step S102 in Fig. 4, and results of the wind condition simulation of the wind-condition estimation area performed at Step S103.

In Fig. 8, the virtual wind condition data 741 is calculated at Step S102 in Fig. 4. The virtual wind condition data 741 is calculated by the simulation processing section 112 on the basis of the past weather data 601 like the ones depicted in Fig. 6, and Fig. 7, the terrain profile data 602, data such as temperature or humidity in the past weather data 601, past wind conditions, and the like.

In Fig. 8, reference character 742 denotes the windmill WM.

Because of the wind equivalent to the virtual wind condition data 741 that blows toward the windmill WM denoted by reference character 742 at time t, wind conditions 743 that are observed at a downwind location (the wind-condition estimation area) of the windmill WM at time t+1 are obtained through the wind condition simulation. In the wind conditions 743, the shading represents wind speeds. The darker the shading is, the faster the wind speed is, and the brighter the shading is, the slower the wind speed is. As represented by the wind conditions 743, there is a disturbance of air such as a vortex of air at the downwind location (the wind-condition estimation area) of the windmill WM. If the drone 500 is caught in such a disturbance (vortex) of air, the drone 500 loses the balance significantly, and it becomes difficult to perform image-capturing, and the like.

### (S104)

Fig. 9 is a figure depicting results of the flow field feature analysis process performed at Step S104 in Fig. 4.

It is supposed here that principal component analysis (proper orthogonal decomposition) is used as the flow field feature analysis technique. Then, Fig. 9 depicts an example in which the principal component analysis is applied to the simulation results depicted as the wind conditions 743 in Fig. 8.

By performing the principal component analysis on the wind conditions 743 of the wind-condition estimation area depicted in Fig. 8, the first mode to the n-th mode of analysis results are obtained. In Fig. 9, reference character 751 denotes the first mode of analysis results, and reference character 752 denotes the n-th mode of analysis results. Whereas only the first mode, and n-th mode of analysis results are depicted here, actually, there are the second mode, third mode, ... (n-1)-th mode of analysis results between the first mode of analysis results, and the n-th mode of analysis results.

Here, the first mode of analysis results denoted by reference character 751 includes a large vortex of air, and the n-th mode of analysis results denoted by reference character 752 includes small flow velocity changes.

One set of the first mode (reference character 751), second mode, ... (n-1)-th mode, and n-th mode (reference character 752) of analysis results generated on the basis of the same simulation results is referred to as an analysis result set 750.

In addition, the analysis processing section 113 also calculates a system matrix A for reconstructing the wind conditions 743 in Fig. 8 from the analysis result set 750. Note that the calculation of the system matrix A can be performed very simply.

### (S105)

At Step S105 in Fig. 4, the storage processing section 114 stores the analysis result set 750 depicted in Fig. 9 in the analysis result DB 200. At this time, the storage processing section 114 stores, in association with the analysis result set 750 and in the analysis result DB 200, the virtual wind condition data 741 in Fig. 8, the system matrix A, and weather conditions such as a temperature or a humidity obtained from the past weather data 601. Note that by storing the analysis result set 750 in the analysis result DB 200 as depicted in Fig. 9, the volume of data stored in the analysis result DB 200 can be reduced.

Next, a specific example of the processes at Steps S201 to 204 in Fig. 5 is explained.

### (S201)

First, at Step S201, the weather forecast data 603 is acquired, and the measured wind condition data 604 is acquired. The measured wind condition data 604 is measured wind condition data equivalent to the virtual wind condition data 741 in Fig. 8. That is, the measured wind condition data 604 is data related to the wind blowing toward the windmill WM.

### (S202)

Then, at Step S203, from the analysis result DB 200, the analysis result acquiring section 312 acquires weather conditions such as a temperature or a humidity obtained from the measured wind condition data 604, and the weather forecast data 603, an analysis result set 750 associated with similar virtual wind condition data 741, and weather conditions, and the system matrix A. Note that the system matrix A may be calculated at this timing.

### (S203)

Next, at Step S203, on the basis of the acquired analysis result set 750, and system matrix A, the wind condition estimating section 313 performs a process according to a reduced order model to thereby reconstruct the wind conditions 743 in Fig. 8. Thereby, wind conditions of the wind-condition estimation area of a time after the passage of predetermined time from the current time are estimated. The time after the passage of predetermined time here means a time equivalent to time t+1, supposing that the current time is time t.

### (S204)

At Step S204, the output processing section 314 outputs, to the drone control apparatus 400, data (the estimated wind condition data 605) of the wind conditions of the wind-condition estimation area estimated by the recovery.

### <Application Example>

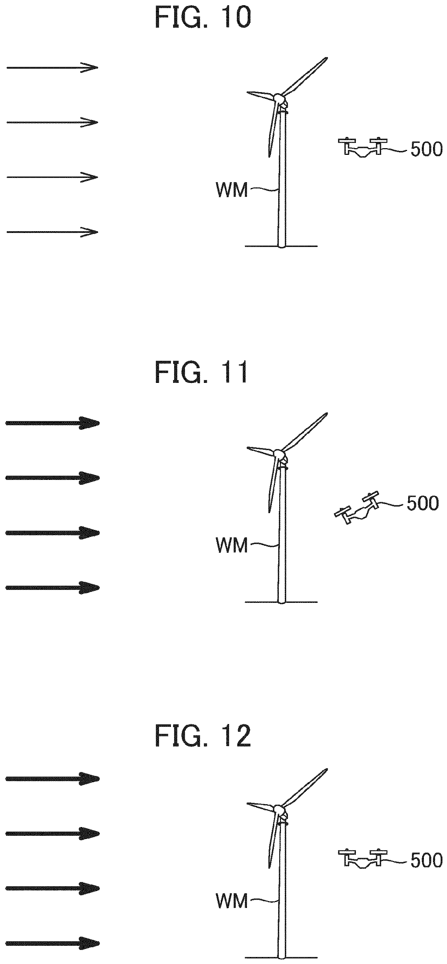

Fig. 10 to Fig. 12 are figures depicting examples of execution by the drone control assistance system 1 according to the present embodiment.

Fig. 10 depicts the flight condition of the drone 500 of the current time, and Fig. 11, and Fig. 12 depict the flight condition of the drone 500 of times each after the passage of predetermined time from the current time.

It is supposed, as depicted in Fig. 10, that the drone 500 is flying by the windmill WM for capturing images in the maintenance of the windmill WM. It is supposed in Fig. 10 that a wind which does not influence the flight of the drone 500 is blowing from the left side on the paper surface (thin arrows in Fig. 10).

Here, it is supposed that a gust like the one represented by thick arrows in Fig. 11 starts blowing from the left side on the paper surface. Then, a disturbance of the air like the one represented by the wind conditions 743 in Fig. 8 occurs at a downwind location of the windmill WM at a time after the passage of predetermined time from the current time. As a result, as depicted in Fig. 11, the flight posture of the drone 500 is disturbed undesirably. Thereby, it becomes difficult to capture appropriate images of the windmill WM undesirably, and a situation occurs where it is necessary to wait until the gust stops, it is necessary to stop the maintenance of that day in some cases, and so on.

In contrast to this, according to the present embodiment, as depicted in Fig. 12, it is possible to perform, almost in real time, a calculation as to how a disturbance of the air occurs at a downwind location of the windmill WM at a time after the passage of predetermined time from the current time, after the gust represented by the thick arrows starts blowing from the left side on the paper surface. In the present embodiment, analysis result sets 750 are stored in the analysis result DB 200 in association with various wind conditions, and weather conditions. Then, the wind condition estimating apparatus 300 searches for an analysis result set 750 in accordance with wind conditions, and weather conditions of an upwind location of the windmill WM of the current time. Furthermore, this is because the wind condition estimating apparatus 300 can reconstruct wind conditions of the wind-condition estimation area (e.g. a downwind location of the windmill WM) on the basis of the analysis result set 750 found through the search. Because the reconstruction takes little time, substantially, it is required only to search for and acquire a result that has been obtained already through wind condition simulations, and the influence of wind condition changes such as a gust can be output in real time.

Thereby, the operator P1 can recognize in advance a disturbance of the air generated by a gust or the like, and can perform maneuvering of the drone 500 according to the gust or the like. As a result, a stable flight of the drone 500 can be realized, and stable image-capturing can be performed in the maintenance or the like.

### [Modification Example]

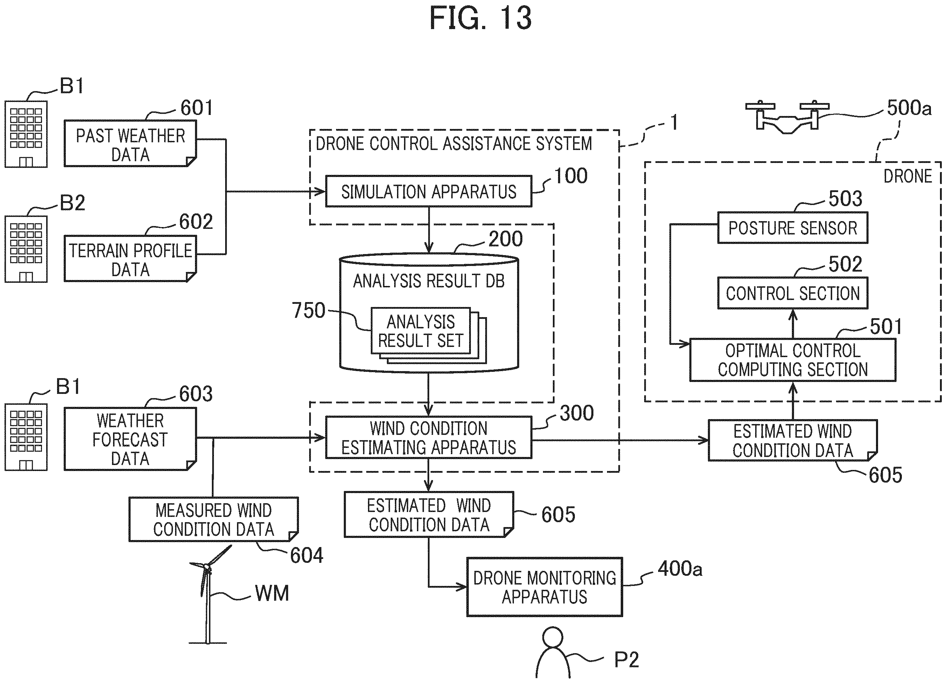

Fig. 13 is a figure depicting another application example of the drone control assistance system 1 according to the present embodiment.

Fig. 13 is different from Fig. 1 in that autonomous control of a drone 500a is performed.

In addition, in Fig. 13, the wind condition estimating apparatus 300 outputs the estimated wind condition data 605 to the drone 500a, and a drone monitoring apparatus 400a.

The drone 500a has an optimal control computing section 501, a control section 502, and a posture sensor 503.

The optimal control computing section 501 calculates control data of a time after the passage of predetermined time from the current time on the basis of the current posture data obtained by the posture sensor 503, and the estimated wind condition data 605 input from the wind condition estimating apparatus 300.

The control section 502 of the drone 500a performs posture control of the drone 500a on the basis of the calculated control data of the time after the passage of the predetermined time.

In addition, an observer P2 monitors whether the drone 500a is performing appropriate autonomous control by monitoring the estimated wind condition data 605 acquired from the wind condition estimating apparatus 300 on the drone monitoring apparatus 400a.

According to the present embodiment, the influence of wind condition changes such as a gust can be output almost in real time, and so it becomes possible for the drone 500 to fly and stay in the air stably. Thereby, stable images can be obtained in image-capturing or the like in maintenance.

In addition, because it is difficult to cope with a gust or the like, typically, only experts are permitted to maneuver the drone 500 in many cases. According to the present embodiment, the operator P1 can recognize in advance estimated wind conditions of a wind-condition estimation area, and so does not necessarily have to be an expert to maneuver the drone 500.

In addition, by performing the flow field feature analysis (Step S104 in Fig. 4), the amount of data of analysis results can be compressed. Thereby, the volume of data stored in the analysis result DB 200 can be reduced.

Furthermore, the simulation processing section 112 generates the virtual wind condition data 741 on the basis of the past weather data 601, and terrain profile data 602 of the wind-condition estimation area. Then, the simulation processing section 112 performs a wind condition simulation on the basis of the generated virtual wind condition data 741. Thereby, the wind condition simulation can be performed in accordance with conditions close to actual wind conditions, and the precision of the wind condition simulation can be enhanced.

Note that whereas it is supposed in the present embodiment that control assistance of the drone 500 around the windmill WM used for wind power generation or the like is performed, this is not the sole example. The drone control assistance system 1 according to the present embodiment may be used for control assistance of the drone 500 around a structure such as a bridge or a plant.

In addition, whereas it is supposed in the present embodiment that the measured wind condition data 604 is acquired from a wind speed center (not depicted) included in the windmill WM, this is not the sole example. The wind speed sensor may be installed on the ground or a building other than the windmill WM, for example, as long as the wind speed sensor is installed near the windmill WM.

In addition, the analysis processing section 113 can be omitted. In this case, Step S104 in Fig. 4 is not executed, and the simulation result (the wind conditions 743 in Fig. 8) is stored in an analysis result DB 740 in association with virtual wind condition data 471, weather conditions, and the like. In addition, the analysis result acquiring section 312 acquires a simulation result on the basis of the current wind conditions, and weather conditions. Thereafter, the simulation result acquired by the output processing section 314 is output to the drone control apparatus 400, the drone monitoring apparatus 400a, and a drone 400a.

In addition, the configuration, functionalities, processing sections 111 to 114, and 311 to 314, analysis result DB 200, and the like that are described before may partially or entirely be realized by hardware by being designed on an integrated circuit, and so on, for example. In addition, as depicted in Fig. 2, and Fig. 3, the configuration, functionalities, and the like that are described before may be realized by software by processors such as the CPUs 121, and 321 interpreting and executing programs to realize the functionalities. Information such as programs, tables or files that realize the functionalities can be stored on the memory 110 or 210, a recording apparatus such as an SSD (Solid State Drive) or a recording medium such as an IC (Integrated Circuit) card, an SD (Secure Digital) card or a DVD (Digital Versatile Disc), other than being stored on an HD.

In addition, whereas control lines, and information lines that are considered to be necessary for explanation are depicted in the embodiments, all control lines, and information lines related to products are not necessarily depicted. It may be considered that actually almost all configurations are connected mutually.

### List of Reference Signs

1: Drone control assistance system (unmanned flying object control assistance system)
112 simulation processing section
113: Analysis processing section (feature calculating section)
312: Analysis result acquiring section (simulation result acquiring section)
313: Wind condition estimating section (simulation result reconstructing section)
314: Output processing section (output section)
500: Drone (unmanned flying object)
601: Past weather data (past weather information)
602: Terrain profile data (terrain profile information)
603: Weather forecast data (weather forecast information)
604: Measured wind condition data (measured wind condition information)
605: Estimated wind condition data (simulation result)
741: Virtual wind condition data (virtual wind condition information)
743: Wind conditions (simulation result)
750: Analysis result set (simulation results, flow field feature)
S103: Wind condition simulation of wind-condition estimation area (simulation step)
S202: Acquisition of analysis result set (simulation result acquisition step)
S104: Output of estimated wind condition data (output step)

## Claims

1. An unmanned flying object control assistance system (1), comprising:
a simulation apparatus (100), comprising:
a data acquiring section (111) configured to acquire past weather data (601) and terrain profile data (602),
a simulation processing section (112) configured to perform a wind condition simulation of wind conditions in a wind condition estimation area on the basis of the acquired past weather data (601) and the acquired terrain profile data (602),
an analysis processing section (113) configured to perform a flow field feature analysis of wind conditions of the wind condition estimation area obtained as a result of the wind condition simulation, to generate analysis result sets (750), and to store the analysis result sets (750) in an analysis result database (200),
a wind condition estimating apparatus (300), comprising:
a data acquiring section (311) configured to acquire weather forecast data (603) and measured wind condition data (604),
an analysis result acquiring section (312) configured to acquire an analysis result set (750) from the analysis result database (200) on the basis of the acquired weather forecast data (603) and the acquired measured wind condition data (604),
a wind condition estimating section (313) configured to estimate wind conditions (605) of the wind condition estimation area for a time (t+1) after the passage of a predetermined time from the current time (t),
an output processing section (314) configured to output the estimated wind conditions (605) to a drone control apparatus (400).

2. An unmanned flying object control assistance method performed by the unmanned flying object control assistance system (1) of claim 1, comprising:
a simulation step performed by the simulation apparatus (100), wherein
the data acquiring section (111) acquires past weather data (601) and terrain profile data (602),
the simulation processing section (112) performs a wind condition simulation of wind conditions in a wind condition estimation area on the basis of the acquired past weather data (601) and the acquired terrain profile data (602),
the analysis processing section (113) performs a flow field feature analysis of wind conditions of the wind condition estimation area obtained as a result of the wind condition simulation, generate analysis result sets (750), and stores the analysis result sets (750) in an analysis result database (200);
a wind condition estimation step performed by the wind condition estimating apparatus (300), wherein
the data acquiring section (311) acquires weather forecast data (603) and measured wind condition data (604),
the analysis result acquiring section (312) acquires an analysis result set (750) from the analysis result database (200) on the basis of the acquired weather forecast data (603) and the acquired measured wind condition data (604),
the wind condition estimating section (313) estimates wind conditions (605) of the wind condition estimation area for a time (t+1) after the passage of a predetermined time from the current time (t),
an output step performed by the output processing section (314), which outputs the estimated wind conditions (605) to a drone control apparatus (400).

## Patentansprüche

1. Unbemanntes Flugobjektsteuerungs-Assistenzsystem (1), umfassend:
eine Simulationsvorrichtung (100), umfassend:
einen Datenerfassungsabschnitt (111), der konfiguriert ist, um vergangene Wetterdaten (601) und Geländeprofildaten (602) zu erfassen,
einen Simulationsverarbeitungsabschnitt (112), der konfiguriert ist, um eine Windbedingungssimulation von Windbedingungen in einem Windbedingungsschätzbereich auf der Grundlage der erfassten vergangenen Wetterdaten (601) und der erfassten Geländeprofildaten (602) durchzuführen,
einen Analyseverarbeitungsabschnitt (113), der konfiguriert ist, um eine Strömungsfeldmerkmalsanalyse von Windbedingungen des Windbedingungsschätzbereichs, die als ein Ergebnis der Windbedingungssimulation erhalten werden, durchzuführen, um Analyseergebnissätze (750) zu erzeugen und die Analyseergebnissätze (750) in einer Analyseergebnisdatenbank (200) zu speichern,
eine Windbedingungsschätzvorrichtung (300), umfassend:
einen Datenerfassungsabschnitt (311), der konfiguriert ist, um Wettervorhersagedaten (603) und gemessene Windbedingungsdaten (604) zu erfassen,
einen Analyseergebniserfassungsabschnitt (312), der konfiguriert ist, um Analyseergebnissätze (750) aus der Analyseergebnisdatenbank (200) auf der Grundlage der erfassten Wettervorhersagedaten (603) und der erfassten gemessenen Windbedingungsdaten (604) zu erfassen,
einen Windbedingungsschätzabschnitt (313), der konfiguriert ist, um Windbedingungen (605) des Windbedingungsschätzbereichs für eine Zeit (t+1) nach dem Verstreichen einer vorbestimmten Zeit ab der aktuellen Zeit (t) zu schätzen,
einen Ausgabeverarbeitungsabschnitt (314), der konfiguriert ist, um die geschätzten Windbedingungen (605) an eine Drohnensteuervorrichtung (400) auszugeben.

2. Unbemanntes Flugobjektsteuerungs-Assistenzverfahren, das durch das unbemannte Flugobjektsteuerungs-Assistenzsystem (1) durchgeführt wird,
unbemanntes Flugobjektsteuerungs-Assistenzsystem (1) nach Anspruch 1, umfassend:
einen Simulationsschritt, der durch die Simulationsvorrichtung (100) durchgeführt wird, wobei
der Datenerfassungsabschnitt (111) vergangene Wetterdaten (601) und Geländeprofildaten (602) erfasst,
der Simulationsverarbeitungsabschnitt (112) eine Windbedingungssimulation von Windbedingungen in einem Windbedingungsschätzbereich auf der Grundlage der erfassten vergangenen Wetterdaten (601) und der erfassten Geländeprofildaten (602) durchführt,
der Analyseverarbeitungsabschnitt (113) eine Strömungsfeldmerkmalsanalyse von Windbedingungen des Windbedingungsschätzbereichs, die als ein Ergebnis der Windbedingungssimulation erhalten werden, durchführt, Analyseergebnissätze (750) erzeugt und die Analyseergebnissätze (750) in einer Analyseergebnisdatenbank (200) speichert;
einen Windbedingungsschätzschritt, der durch die Windbedingungsschätzvorrichtung (300) durchgeführt wird, wobei
der Datenerfassungsabschnitt (311) Wettervorhersagedaten (603) und gemessene Windbedingungsdaten (604) erfasst,
der Analyseergebniserfassungsabschnitt (312) Analyseergebnissätze (750) aus der Analyseergebnisdatenbank (200) auf der Grundlage der erfassten Wettervorhersagedaten (603) und der erfassten gemessenen Windbedingungsdaten (604) erfasst,
der Windbedingungsschätzabschnitt (313) Windbedingungen (605) des Windbedingungsschätzbereichs für eine Zeit (t+1) nach dem Verstreichen einer vorbestimmten Zeit ab der aktuellen Zeit (t) schätzt,
einen Ausgabeschritt, der durch den Ausgabeverarbeitungsabschnitt (314) durchgeführt wird, der die geschätzten Windbedingungen (605) an eine Drohnensteuervorrichtung (400) ausgibt.

## Revendications

1. Système d'aide à la commande d'objet volant sans pilote (1), comprenant :
un appareil de simulation (100), comprenant :
une section d'acquisition de données (111) configurée pour acquérir des données météorologiques passées (601) et des données de profil de terrain (602),
une section de traitement de simulation (112) configurée pour effectuer une simulation de conditions de vent de conditions de vent dans une zone d'estimation de conditions de vent sur la base des données météorologiques passées acquises (601) et des données de profil de terrain acquises (602),
une section de traitement d'analyse (113) configurée pour effectuer une analyse de caractéristiques de champ d'écoulement de conditions de vent de la zone d'estimation de conditions de vent obtenues en tant que résultat de la simulation de conditions de vent, pour générer des ensembles de résultats d'analyse (750), et pour stocker les ensembles de résultats d'analyse (750) dans une base de données de résultats d'analyse (200),
un appareil d'estimation de conditions de vent (300), comprenant :
une section d'acquisition de données (311) configurée pour acquérir des données de prévisions météorologiques (603) et des données de conditions de vent mesurées (604),
une section d'acquisition de résultats d'analyse (312) configurée pour acquérir des ensembles de résultats d'analyse (750) à partir de la base de données de résultats d'analyse (200) sur la base des données de prévisions météorologiques acquises (603) et des données de conditions de vent mesurées acquises (604),
une section d'estimation de conditions de vent (313) configurée pour estimer des conditions de vent (605) de la zone d'estimation de conditions de vent pendant un temps (t+1) après le passage d'un temps prédéterminé à partir du temps actuel (t),
une section de traitement de sortie (314) configurée pour délivrer en sortie les conditions de vent estimées (605) à un appareil de commande de drone (400).

2. Procédé d'aide à la commande d'objet volant sans pilote réalisé par le système d'aide à la commande d'objet
Système d'aide à la commande d'objet volant sans pilote (1) selon la revendication 1, comprenant :
une étape de simulation réalisée par l'appareil de simulation (100), dans lequel la section d'acquisition de données (111) acquiert des données météorologiques passées (601) et des données de profil de terrain (602),
la section de traitement de simulation (112) effectue une simulation de conditions de vent de conditions de vent dans une zone d'estimation de conditions de vent sur la base des données météorologiques passées acquises (601) et des données de profil de terrain acquises (602),
la section de traitement d'analyse (113) effectue une analyse de caractéristiques de champ d'écoulement de conditions de vent de la zone d'estimation de conditions de vent obtenues en tant que résultat de la simulation de conditions de vent, génère des ensembles de résultats d'analyse (750), et stocke les ensembles de résultats d'analyse (750) dans une base de données de résultats d'analyse (200) ;
une étape d'estimation de conditions de vent réalisée par l'appareil d'estimation de conditions de vent (300), dans lequel
la section d'acquisition de données (311) acquiert des données de prévisions météorologiques (603) et des données de conditions de vent mesurées (604),
la section d'acquisition de résultats d'analyse (312) acquiert des ensembles de résultats d'analyse (750) à partir de la base de données de résultats d'analyse (200) sur la base des données de prévisions météorologiques acquises (603) et des données de conditions de vent mesurées acquises (604),
la section d'estimation de conditions de vent (313) estime des conditions de vent (605) de la zone d'estimation de conditions de vent pendant un temps (t+1) après le passage d'un temps prédéterminé à partir du temps actuel (t),
une étape de sortie réalisée par la section de traitement de sortie (314), qui délivre en sortie les conditions de vent estimées (605) à un appareil de commande de drone (400).
